# EUROPEAN PATENT SPECIFICATION

(11) **EP 4 068 641 B1**
(45) Date of publication and mention of the grant of the patent: **18.11.2026**
(21) Application number: 21465515.1
(22) Date of filing: 29.03.2021
(51) Int. Cl.: H04B 5/00, B60R 25/24

(54) **METHOD FOR CONTROLLING AT LEAST ONE ANTENNA, DRIVER CIRCUIT AND PASSIVE START AND ENTRY SYSTEM OF A VEHICLE**
VERFAHREN ZUR STEUERUNG VON MINDESTENS EINER ANTENNE, TREIBERSCHALTUNG UND PASSIVES START- UND ZUGANGSSYSTEM EINES FAHRZEUGS
PROCÉDÉ DE COMMANDE D'AU MOINS UNE ANTENNE, CIRCUIT DE COMMANDE ET SYSTÈME D'ENTRÉE ET DE DÉMARRAGE PASSIF D'UN VÉHICULE

(43) Date of publication of application: 05.10.2022
(73) Proprietor: AUMOVIO Germany GmbH, 60488 Frankfurt am Main (DE)
(72) Inventor: Al-Hiary, Issa, 81739 München (DE); Saß, Dieter, 81739 München (DE); Schuster, Rupert, 81739 München (DE); Popa, Adrian-Traian, 81739 München (DE)
(74) Representative: Aumovio Corporation

(56) References cited:
- US-A1- 2017 104 468
- US-B1- 10 439 659

## Description

The invention relates to a method for controlling at least one antenna for a passive start and entry system of a vehicle by means of a driver circuit, wherein during a first operation cycle of the antenna, during which the driver circuit controls the antenna to send a signal, the driver circuit controls an antenna current through the antenna in dependency of a preset target antenna current and in dependency of at least one control parameter, wherein at the beginning of the controlling of the antenna current the driver circuit uses at least one predefined first control parameter value as a first initial value of the at least one control parameter. The invention also relates to a driver circuit for controlling at least one antenna and to a passive start and entry system for a vehicle.

US 10439659 B1 and US 2017104468 A1 concern passive entry and start systems.

Keyless vehicle entry and starting systems, such as the passive start and entry (PASE) system, for example, are automatic systems to unlock a vehicle without actively using a car key and to start said vehicle by merely operating the starting button. This is made possible by an electronic key with a chip that the vehicle driver carries with him. The vehicle may use for example at least one antenna on the vehicle to transmit periodically an encoded inquiry signal at an LF frequency, i.e. a low frequency, for example between 20 kHz and 200 kHz. The system then changes to a reception mode in the RF (radio frequency) band and awaits confirmation. If a key equipped with a transponder is within a certain range, then it receives the LF signal, decodes it and transmits it again with a new coding as a RF signal. The RF signal is decoded in the vehicle. The vehicle then can allow entry in the event of a match. If there is no correct response within a defined time, nothing happens and the system switches to stand by again. The engine starting process essentially corresponds to that of the entry control, with the difference being that in this case the engine starting button needs to be operated. To ensure, that the key of the user is within the vehicle cabin when starting the engine, the vehicle is also capable by means of the PASE system to localize the key and only to start the engine in case the key is localized within the vehicle.

The antenna used for transmitting the LF signal is predominantly an inductive antenna that is embodied as a ferrite core provided with a winding, also known as a magnetic antenna or ferrite antenna, for example. In this case, the induction of the inductive antenna often is operated together with a capacitor in a resonant circuit. The energy consumption of such a resonant circuit is usually kept low by a quality factor that is as high as possible and by an exact frequency tuning, in order to minimize the total current consumption of the passive entry and starting system. Further, such systems have to be conform to the radio approval regulations. The radio approval regulations are intended to ensure that other radio services such as e.g. broadcasting, mobile radio services or cellular phones are not adversely affected in the operation.

In the new generation of classical passive start and entry system which are based on LF/RF communication, the antenna current to generate the magnetic field on the LF antenna for authentication and localization purpose is automatically regulated to a targeted value by a driver circuit, especially a low frequency driver integrated circuit. Thereby, the driver circuit can use a preconfigured default antenna impedance to select an appropriate DC/DC boost voltage value to generate the magnetic field with the requested antenna current amplitude. During the LF antenna operation, also called operation cycle in the present application, the current regulation algorithm determines and applies the appropriate DC/DC voltage and duty cycle to make the antenna current match the target antenna current. However, this may take some time and an immediate authentication and localization may not be possible. To reduce the settling time the driver circuit could use the values of the control parameters of the last operation cycle also for the beginning of the next operation cycle. However, this would cause further problems. This is due to the fact that heavy resonance detuning can be caused for example by a foreign metallic object in the close proximity to the LF antenna. The lowered resonance elevation will be compensated by the regulation algorithm up to its maximum excitation limits. When a foreign metallic object detunes the resonance circuit with the antenna heavily, the regulation algorithm increases the DC/DC boost voltage and the duty cycle to high values in order to run the targeted antenna current and stores those learned values. When the following object is removed, the next activation is started with those high learned values that then would cause an overcurrent through the now well-tuned antenna. In this case a protection event can be triggered and the affected driver stage of the driver circuit can be deactivated. Many repetitions of such an overcurrent reduce the life time of the driver circuit and the driver circuit can be damaged, leading to customer complaints.

It is therefore an object of the present invention to provide a method for controlling an antenna, a driver circuit and a passive start and entry system, which allow for a quick and precise creation of a requested signal, especially a magnetic field, without reducing the life time of the driver circuit too much.

This object is solved by a method, a driver circuit and a passive start and entry system with the features according to the independent claims. Advantageous embodiments of the invention are presented in the dependent claims, the description and the drawings.

According to the invention a method for controlling at least one antenna for a passive start and entry system of a vehicle by means of a driver circuit is provided, wherein during a first operation cycle of the antenna, during which the driver circuit controls the antenna to send a signal, the driver circuit controls an antenna current through the antenna in dependency of a preset target antenna current and in dependency of at least one control parameter, wherein at the beginning of the controlling of the antenna current the driver circuit uses at least one predefined first control parameter value as a first initial value of the at least one control parameter.

Moreover; according to the invention, the driver circuit determines whether a certain threshold condition is fulfilled and only in case the certain threshold condition is fulfilled the driver circuit uses at least one second control parameter value acquired and stored during the first operation cycle as a second initial value of the at least one control parameter for a next second operation cycle.

Thus, by using the at least one second control parameter value as second initial value for the next second operation cycle the settling time for achieving a certain target antenna current can be reduced for the next second operation cycle, at least in average, because such a control parameter value, which has been acquired and stored during a previous operation cycle provides a much better starting point for the regulation in form of a closed loop control than some average preset configuration values. On the other hand, the driver circuit still can be prevented from overcurrent events and overcurrent protection events, like a driver stage deactivation of the driver stage of the driver circuit, because the at least one second control parameter value is only used as initial value for the next operation cycle in case a certain threshold condition is fulfilled. Therefore, during the learning of the initial values for the antenna current regulation algorithm, the use of such learned values can be restricted to only "good" values that cannot cause an overcurrent at a tuning change and a protection event or at least make such overcurrent and protection events more unlikely. So, advantageously, the driver circuit's life time and systems robustness can be increased and the number of repetitions of protection events caused by approach and removal of foreign metallic objects can be reduced. Thus, the system's robustness and life time is increased by the learning method of antenna impedance.

The at least one antenna controlled according to this method can be a magnetic antenna or ferrite antenna as described in the beginning. Such an antenna constitutes preferably a LF antenna, that is an antenna which is configured to emit electromagnetic signals in the low frequency range as also defined in the beginning. Thus, the driver circuit may be configured as a LF driver circuit, especially in the form of an integrated circuit, like the LF driver integrated circuit for the new generation of PASE systems as also described in the beginning. The driver circuit and the antenna can also be configured to provide different magnetic fields or to send different signals in different situations. Therefore, for these different situations optionally also different target antenna currents can be defined. To provide an antenna current, which matches the target antenna current, the driver circuit can set an appropriate DC/DC boost voltage and duty cycle of e.g. an converter unit of the driver circuit, e.g. in dependency of an impedance of the antenna acquired in the operation cycle before. In other words, the impedance associated with the antenna may constitute at least one of the above-described learned values, e.g. the second control parameter value. This has the advantage, that the impedance can be used as suitable initial value for a next operation cycle, even in case that a different magnetic field shall be provided than in the last operation cycle, because appropriate voltage and duty cycle values can be calculated on the basis of the antenna impedance. On the other hand, also the voltage and duty cycle values as such can be provided as learned values and be used for the next operation cycle. This allows for a very easy implementation, especially in case a same magnetic field shall be provided in subsequent operation cycles. An operation cycle may be initiated at predefined times, e.g. periodically, and/or upon a certain trigger event.

The control circuit can also be configured to control more than one antenna. In other words, the driver circuit can control several antennas as described with regard to the at least one antenna. Thereby the driver circuit can control the antenna current of each antenna in the same way but separately. The driver circuit can acquire for each antenna the respective learned values and use these learned values, namely the respective second control parameter values, for the next second operation cycle of each antenna. So the individual properties of each antenna can be considered when controlling the respective antennas.

Moreover, the control circuit controls the antenna current during the respective operation cycles in form of a closed-loop control. Thus the expression regulation used in the following shall preferably be interpreted as such a closed-loop control

According to the invention an impedance value associated with the antenna is acquired during the first operation cycle and the certain threshold condition comprises that the impedance value does not exceed a predefined first threshold. Thereby, the impedance associated with the antenna can be the impedance of a resonance circuit comprising the antenna. For example, such a resonance circuit can comprise the at least one antenna and additionally at least one further electric component, for example a capacitor. As described in the beginning, the induction of the inductive antenna can be operated together with a capacitor in a resonant circuit. Thus the impedance value associated with the antenna can constitute the impedance of such a resonance circuit.

In case, the resonance of such a resonance circuit is detuned by a foreign metallic object in close proximity to the antenna, such a resonance detuning also affects the impedance associated with the antenna. Especially such detuning can result in a very large impedance associated with the antenna. By means of above defined advantageous threshold condition, namely, that the impedance value does not exceed a predefined threshold, such heavy resonance detuning events can effectively be filtered out. In other words, in case a heavy resonance detuning of the antenna takes place, e.g. caused by a foreign metallic object, the at least one second control parameter value is not learned and used for the next second operation cycle. Especially the at least one second control parameter value in this case may not even be stored. So advantageously in case the impedance value of the antenna or more precisely of the resonance circuit including the antenna does not exceed the predefined threshold, it is very unlikely that any short circuit conditions or heavy resonance detuning events are present at the moment, namely during the first operation cycle, and the at least one second control parameter value can be acquired and stored for use in the next second operation cycle without risking an overcurrent event.

According to the invention during the first operation cycle an impedance value associated with the antenna is acquired, which can be the impedance value mentioned above, and the certain threshold condition comprises that the impedance value is not smaller than a predefined second threshold. So, advantageously, not only an upper first threshold can be provided for the impedance value, but also a lower second threshold. Also the impedance value falling below such a predefined second threshold gives a hint for irregular operation conditions. Also in this case the at least one second parameter value is not stored and used in the second operation cycle. Thus, in case the impedance value is somewhere between the first and second threshold, regular operation conditions can be assumed and the at least one second control parameter value of the current operation cycle can be learned and stored for the next operation cycle.

According to another advantageous embodiment of the invention the at least one second control parameter value provides a setting or is derived form a setting for the controlling of the antenna current, according to which the antenna current coincided with the preset target antenna current in the first operation cycle, at least within a pre-definable tolerance range. Such a setting provides a very good starting point for the regulation in form of a closed-loop control in the next operation cycle to be able to reach the desired target antenna current in a very short time. So, generally, the at least one control parameter preferably constitutes a voltage, especially the DC/DC boost voltage, or a duty cycle of the driver circuit and/or the impedance value associated with the antenna.

For example, the settings, which were used to achieve a certain target antenna current in the first operation cycle can be used again in the second operation cycle to be able to achieve the target antenna current for the second operation cycle more quickly, even though the surrounding conditions may have changed slightly. These settings can concern for example the above explained DC/DC boost voltage and duty cycle. On the other hand, the second control parameter value can also be derived from such a setting, e.g. the voltage and duty cycle. The second control parameter value can for example be an impedance value derived from the voltage, duty cycle and antenna current in the last operation cycle. This impedance value can then be used to calculate appropriate settings for the voltage and the duty cycle in the next operation cycle, dependent on a target antenna current, which may even be different from the target antenna current of the last operation cycle but can also be the same.

According to another advantageous embodiment of the invention, in case the threshold condition is not fulfilled, the driver circuit uses the at least one predefined first control parameter value as the second initial value of the at least one control parameter for controlling the antenna current in the next second operation cycle. Thereby, the risk of an overcurrent event or protection event can be avoided and simply the last stored control parameter value or values can be used for the next operation cycle. This first control parameter value may for example constitute an initially set control parameter value or the control parameter value, which has been acquired and stored in a third operation cycle prior to the first operation cycle. So, in the beginning of this procedure, when the operation cycle is operated for the very first time, an initially set control parameter value, like a manually defined value, can be used as initial value for starting the regulation of the antenna current to the target antenna current. This initially set control parameter value can be some kind of average value or experience based value, which is suitable as starting point for the regulation. After the very first operation cycle for each next operation cycle previously learned parameter values can be used for the regulation, as long as the threshold condition is fulfilled.

According to another very advantageous embodiment of the invention in case an overcurrent event and/or an overcurrent protection even is detected, especially at the beginning of an operation cycle, the driver circuit determines whether a currently acquired impedance value is larger than the second threshold, and in case the currently acquired impedance value is larger than the second threshold, the driver circuit lowers the first threshold such that it is still larger than the second threshold. This has the great advantage, that also the first upper threshold for the impedance value can be further adapted in case there is an overcurrent or protection event detected. An overcurrent protection event ca be a deactivation of at least part of the driver circuit, like a driver stage. This avoids further overcurrent events in the future in an even more reliable way. In case an overcurrent or protection event is detected again, then also the first threshold can be lowered again as long as it is still larger than the second threshold. Therefore, the first threshold can be lowered from time to time until no overcurrent events occur anymore.

According to another advantageous embodiment of the invention the driver circuit lowers the first threshold by subtraction of a percent value of the first threshold. This has the advantage that the first threshold is lowered the less the smaller it gets. In other words, the steps of lowering the first threshold are getting smaller and smaller from time to time. This allows for a very precise adaption of the first threshold to a final first threshold value which is as large as possible and at the same time small enough to prevent from any further overcurrent event. In case the first threshold value would be lowered in too large steps, this would result in a very small first threshold value, which then would still prevent from overcurrent events but would more or less disable the learning effect.

Moreover, the invention also relates to a driver circuit for controlling at least one antenna for a passive start and entry system of a vehicle, wherein the driver circuit is configured during a first operation cycle of the antenna, during which the driver circuit controls the antenna to send a signal, to control an antenna current through the antenna in dependency of a preset target antenna current and in dependency of at least one control parameter. Moreover, the driver circuit is configured at the beginning of the controlling of the antenna current to use at least one predefined first control parameter value as a first initial value of the at least one control parameter. Further, the driver circuit is configured to determine whether a certain threshold condition is fulfilled and only in case the certain threshold condition is fulfilled to use at least one second control parameter value acquired and stored during the first operation cycle as second initial value of the at least one control parameter for a next second operation cycle.

The advantages describes with regard to the method of controlling at least one antenna according to the invention and its embodiments similarly apply to the driver circuit according to the invention. Further, the embodiments described with regard to the method according to the invention provide similar embodiments of the driver circuit according to the invention.

Furthermore, the invention also relates to a passive start and entry system for a vehicle, wherein the passive start and entry system comprises a driver circuit according to the invention or one of its embodiments. The passive start and entry system may also comprise the at least one antenna. It is preferred, that the passive start and entry system comprises several antennas, which are controllable by means of the driver circuit. The antennas can be arranged in a certain spatial distribution to allow for a very homogenous detection range, e.g. around a vehicle, in which the passive start and entry system is used. Therefore, also a vehicle comprising such a passive start and entry system shall be regarded as being part of the invention. Thereby the several antennas do not have to be activated all at the same time.

Further, also a vehicle comprising such a passive start and entry system shall be seen as being part of the invention.

The invention also comprises embodiments that provide additional technical advantages.

The invention also comprises the combinations of the features of the described embodiments.

In the following an exemplary implementation of the invention is described. The figures show:
- Fig. 1: a schematic illustration of a vehicle with a passive start and entry system according to an embodiment of the invention;
- Fig. 2: a schematic illustration of a method for controlling an antenna of the passive start and entry system according to an embodiment of the invention; and
- Fig. 3: a schematic illustration of a method for controlling an antenna of the passive start and entry system according to another embodiment of the invention.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures elements that provide the same function are marked with identical reference signs.

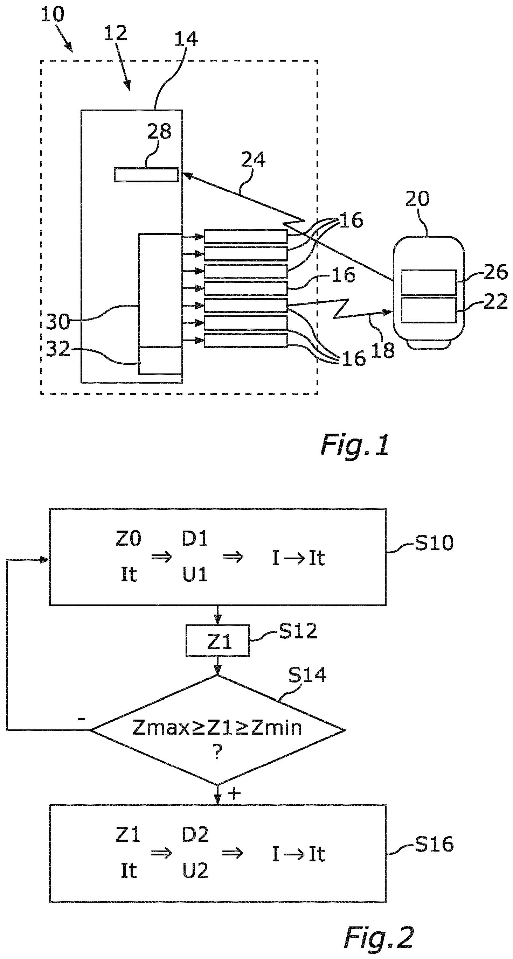

Fig. 1 shows a schematic illustration of a vehicle 10 comprising a passive start and entry system 12 according to an embodiment of the invention. The passive start and entry system 12 comprises an electronic control unit 14 and at least one antenna 16.

In this example, the system 12 comprises seven antennas 16, for example one antenna 16 on the left exterior side of the vehicle 10, one antenna 16 on the right exterior side of the vehicle 10, one antenna 16 on the rear exterior side of the vehicle 10, one antenna 16 interior of the trunk of the vehicle 10, one antenna 16 interior of the center of the vehicle 10, one antenna 16 interior of the vehicle 10 at the front of the vehicle 10 and optionally another antenna 16 exterior at the front of the vehicle 10. These antennas 16 are configured as low frequency antennas. The carrier frequency may be for example 125 kHz. By means of the antennas a low frequency signal 18, especially by establishing the corresponding magnetic field, can be provided, on the basis of which a key 20 for the vehicle 10 can be authenticated and localized. If this key 20 receives the LF signal 18 by means of a corresponding LF receiver 22, the key 20 can emit a corresponding response signal in form of a RF signal 24 by means of a suitable RF transmitter 26. This RF response signal 24 can be received by means of the electronic control unit 14, especially by means of a suitable RF receiver 28 of the electronic control unit 14. For the purpose of generating such a low frequency signal 18 emitted by the corresponding antenna 16 the electronic control unit 14 further comprises a low frequency driver circuit 30, which again may comprise a power supply in form of a DC/DC converter 32. This low frequency driver circuit 30 automatically regulates the antenna current for generating the magnetic field in the low frequency antenna 16 for authentication and localization purposes to a targeted value. This is illustrated in Fig. 2.

Fig. 2 shows a schematic flow chart of the controlling of an exemplary antenna 16 of the passive start and entry system 12 according to an embodiment of the invention. Basically, for the first magnetic field transmission after receiving for example a power on signal or other trigger event, the LF driver circuit 30 uses in step S10 a pre-configured default antenna impedance Z0 to select an appropriate DC/DC boost voltage value U1 and maybe also a suitable duty cycle value D1 to generate the magnetic field with a requested antenna current amplitude, which is also called target antenna current value It. Starting with these values, the driver circuit, especially a current regulation algorithm of the driver circuit 30, determines and applies appropriate DC/DC voltage and duty cycle values during the operation of the LF antenna 16 to make the antenna current I match the target It. Further, the driver circuit 30 may also store the values for the next operation as learned values. Using such learned values for the next operation cycle has the advantage, that settling times can be reduced. This allows for extremely quick responses of the system 12 e.g. to certain trigger events like a capacitive sensor in a door handle of the vehicle 10 detecting a user touching the handle to open the door. Therefore, the time for performing the above described authentication or localization, which then is the time between the detection of the hand of the user on the door handle and the user pulling the door handle to open the door, is extremely short.

However, using the learned values unconditionally for the next operation cycle may cause several problems. Any issue that prevents the regulation from achieving the targeted antenna current such as short circuit conditions or heavy resonance detuning is diagnosed and leads to corresponding system reactions. Heavy resonance detuning can be caused by a foreign metallic object in close proximity to the **LF** antenna 16. The lowered resonance elevation will be compensated by the regulation algorithm up to its maximum excitation limits. Further, the LF driver circuit's output driver stage is protected against overcurrent for reliability reasons. In case of an output current I that exceeds the overcurrent protection threshold, the affected driver stage is deactivated.

Due to regulation algorithms of the driver circuit used up to now, an overcurrent protection event can occur after a tuning change from a heavily detuned state into a well-tuned state. When a foreign metallic object detunes the resonance circuit with the antenna heavily, the regulation algorithm increases the DC/DC boost voltage and the duty cycle to high values in order to run the target antenna current and stores those learned values. When the foreign object is removed, the next activation is started with those high learned values that can cause an overcurrent through the now well-tuned antenna. Thus a protection event is triggered and the affected driver stage will be deactivated. Many repetitions of such an overcurrent reduce the life time of the driver circuit and a LF driver device damage can happen.

This can now advantageously be avoided by the learning method of the antenna impedance as described in the following. This is based on the finding, that during the learning of the initial values for the antenna current regulation algorithm one can restrict to only good values that cannot cause an overcurrent at tuning change and a protection event.

First of all, an initial impedance threshold is configured that only allows learning at any detuning within a normal tolerance band. For that purpose a minimum threshold Zmin and a maximum threshold Zmin for the antenna impedance is defined. For example these thresholds can be defined as follows: $Zmin = b 1 ⋅ π ⋅ fc ⋅ L 0 a ⋅ \left(It_max/It\right) ; and$ $Zmin = b 2 ⋅ π ⋅ fc ⋅ L 0 a ⋅ \left(It_max/It\right) ;$

With the coefficients b1, b2, preferably between 0 and 1, wherein b1 is smaller than b2, e.g. b1 may be 0.225 and b2 0.45. Further, fc is the carrier frequency, e.g. 125 kHz, L0a the nominal antenna inductance, It_max the maximum standard antenna target current, e.g. 1,25 a or 2,5 a for high power antennas, and It the maximum configured target current of the selected antenna.

During an operation cycle, especially the end of an operation cycle, like the one described in step S10 the impedance Z1 can be measured in step S12 and then be compared to the minimum and maximum threshold Zmin, Zmax in step S14. If the actually measured impedance Z1 is higher than that maximum threshold Zmax for the impedance, then the current DC/DC voltage and duty cycle values are not stored, and the old values are kept, like the previously used impedance Z0 and/or the DC/DC voltage and duty cycle values U1, D1 derived therefrom as initial values for the regulation. So in this case the procedure can start again in step S10.

However, in case the current impedance Z1 lies within the defined impedance threshold range then the values learned in step S10 can be used in the next operation cycle in step S16 for the regulation of the antenna current I. For example, the learned impedance Z1 can be used to therefrom derive new initial values for the DC/DC voltage U2 and the duty cycle D2 or these DC/DC voltage and duty cycle values U2, D2 can directly be used as learned values from the first operation cycle S10, especially which then would constitute the DC/DC voltage and duty cycle values U2, D2 which in the end of the first operation cycle in step S10 lead to the antenna current I being identical with the target antenna current It at least within defined tolerance limits. Then the procedure can continue as already described for each further operation cycle.

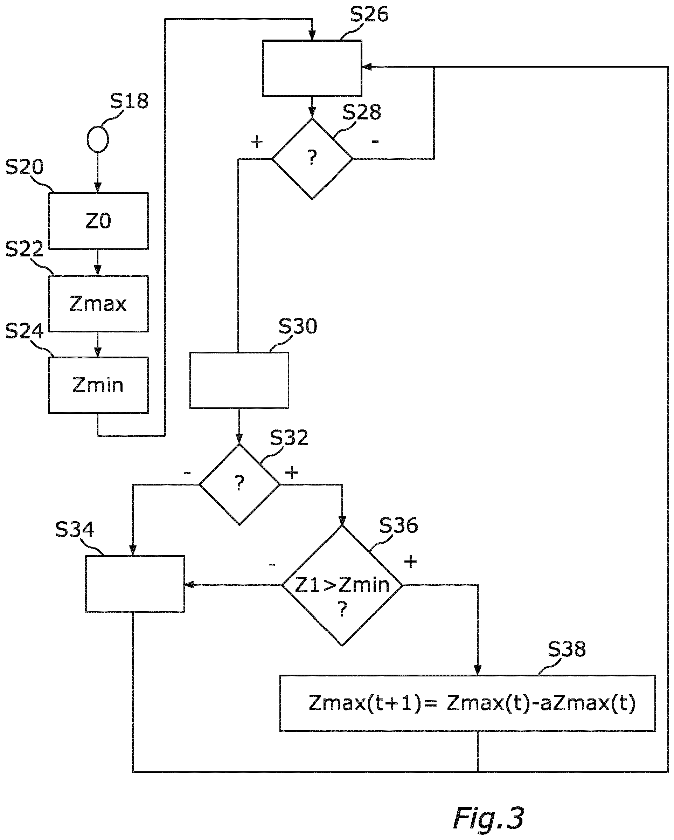

Fig. 3 shows another schematic illustration of a method for controlling an antenna 16 of a passive start and entry system 12 according to another embodiment of the invention. The beginning of the illustrated method is denoted by step S18, in which an activation event occurs. This activation event S18 could be the first initialisation of the PASE system 12. Such an event S18 may also occur after a reset of the PASE system 12. Then, in step S20 a nominal antenna impedance configuration takes place in which an initial value Z0 for the antenna impedance is defined. Further in step S22 a maximum antenna impedance tolerance configuration takes place, in which the maximum threshold value Zmax for the antenna impedance is defined. After that, in step S24 a minimum antenna impedance tolerance configuration takes place, in which the minimum threshold Zmin for the antenna impedance is defined. These thresholds Zmin, Zmax can be defined as defined above with regard to Fig. 2. These steps S20, S22, S24 can take place in any arbitrary timely order. Then the system 12 is in an ideal state in step s26 until an activation event in form of the receipt of the magnetic field transmission request is received. Therefore, in step S28 the system 12, especially the driver circuit 30 determines, whether such a magnetic field transmission request has been received. If no request has been received, the method restarts in step S26. Otherwise, the driver circuit 30 starts the magnetic field transmission in step S30 by performing an operation cycle as described before, especially, within this step S30 the previously described steps S10, S12, S14 or S16 as illustrated in Fig. 2 can take place. During such an operation cycle performed in step S30 it can be determined in step S32, whether an overcurrent protection event and therefore an overcurrent event has been detected. If no overcurrent protection event is detected, the current antenna impedance configuration is kept in step S34 and the method restarts in step S26. That the current antenna impedance configuration is kept means that the defined threshold values Zmax, Zmin are not changed. If an overcurrent event is detected in step S32, it is determined in step S63 whether the measured antenna impedance Z1 is larger than the minimum threshold value Zmin. If this is not the case, the method proceeds with step S34 and otherwise the maximum antenna impedance tolerance, namely the maximum threshold Zmax is reconfigured, especially reduced, in step S38. This can be done by the following formular: $Zmax \left(t+1\right) = Zmax \left(t\right) - a ⋅ Zmax \left(t\right)$

Thereby, the maximum threshold Zmax is reduced by a percent value of the maximum threshold value Zmax defined by the coefficient a, which is larger than 0 and smaller than 1, for example 0.25. Further, t defines a current time step and t+1 defines the next time step.

Thereby the system's robustness is increased, because by means of this methods the other current protection events can be reduced to the minimum without impacting the system's performance by too strong constrains. The system's operating life time is not decreased by presence and removal of foreign metallic objects.

Overall, the example shows how an overcurrent protection recurrence avoidance for regulated resonance circuits is provided by the invention.

### Reference signs

- 10: vehicle
- 12: passive start and enty system
- 14: electronic control unit
- 16: antenna
- 18: LF signal
- 20: key
- 22: LF receiver
- 24: RF response signal
- 26: RF transmitter
- 28: RF receiver
- 30: LF driver circuit
- 32: DC/DC converter

- a: coefficient
- D1: duty cycle value
- D2: duty cycle value
- I: antenna current
- It: target antenna current
- t: timestep
- Z0: impedance value
- Z1: impedance value
- Z2: impedance value
- Zmin: minimum impedance threshold
- Zmax: maximum impedance threshold

- S10: step
- S12: step
- S14: step
- S16: step
- S18: step
- S20: step
- S22: step
- S24: step
- S26: step
- S28: step
- S30: step
- S32: step
- S34: step
- S36: step
- S38: step

## Claims

1. Method for controlling at least one antenna (16) for a passive start and entry system (12) of a vehicle (10) by means of a driver circuit (30), wherein during a first operation cycle (S10) of the antenna (16), during which the driver circuit (30) controls the antenna (16) to send a signal (18), the driver circuit (30) controls an antenna current (I) through the antenna (16) in dependency of a preset target antenna current (It) and in dependency of at least one control parameter, wherein at the beginning of the controlling of the antenna current (I) the driver circuit (30) uses at least one predefined first control parameter value (Z0, D1, U1) as a first initial value of the at least one control parameter,
**wherein**
the driver circuit (30) determines whether a certain threshold condition (S14) is fulfilled and only in case the certain threshold condition (S14) is fulfilled the driver circuit (30) uses at least one second control parameter value (Z1, D2, U2) acquired and stored during the first operation cycle (S10) as second initial value of the at least one control parameter for a next second operation cycle (S16),
**characterized in that**
during the first operation cycle (S10) an impedance value (Z1) associated with the antenna is acquired and the certain threshold condition (S14) comprises that the impedance value (Z1) does not exceed a predefined first threshold (Zmax) and is not smaller than a predefined second threshold (Zmin),
wherein
in case an overcurrent event or overcurrent protection event is detected, , the driver circuit (30) determines whether the currently acquired impedance value (Z1) is larger than the second threshold (Zmin), and in case the currently acquired impedance value (Z1) is larger than the second threshold (Zmin), the driver circuit (30) lowers the first threshold (Zmax) such that it is still larger than the second threshold (Zmin).

2. Method according to one of the preceding claims,
wherein
the at least one second control parameter value (Z1, D2, U2) provides a setting (D2, U2) or is derived from a setting (D2, U2) for the controlling of the antenna current (I) according to which the antenna current (I) coincided with the preset target antenna current (It) in the first operation cycle (S10).

3. Method according to one of the preceding claims,
wherein
in case the threshold condition (S14) is not fulfilled, the driver circuit (30) uses the least one predefined first control parameter value (Z0, D1, U1) as the second initial value of the at least one control parameter for controlling the antenna current (I) in the next second operation cycle (S16).

4. Method according to one of the preceding claims,
wherein
the at least one control parameter constitutes a voltage and/or a duty cycle of the driver circuit (30) and/or an impedance associated with the antenna (16).

5. Method according to one of the preceding claims,
wherein
the driver circuit (30) lowers the first threshold (Zmax) by subtraction of a percent value (a) of the first threshold (Zmax).

6. Driver circuit (30) for controlling at least one antenna (16) for a passive start and entry system (12) of a vehicle (10), wherein the driver circuit (30) is configured during a first operation cycle (S10) of the antenna (16), during which the driver circuit (30) controls the antenna (16) to send a signal (18), to control an antenna current (I) through the antenna (16) in dependency of a preset target antenna current (It) and in dependency of at least one control parameter, and at the beginning of the controlling of the antenna current (I) to use at least one predefined first control parameter value (Z0, D1, U1) as a first initial value of the at least one control parameter,
**wherein** the driver circuit (30) is configured to determine whether a certain threshold condition (S14) is fulfilled and only in case the certain threshold condition (S14) is fulfilled to use at least one second control parameter value (Z1, D2, U2) acquired and stored during the first operation cycle (S10) as second initial value of the at least one control parameter for a next second operation cycle (S16),
**characterized in that**
during the first operation cycle (S10) an impedance value (Z1) associated with the antenna is acquired and the certain threshold condition (S14) comprises that the impedance value (Z1) does not exceed a predefined first threshold (Zmax) and is not smaller than a predefined second threshold (Zmin),
wherein
in case an overcurrent event or overcurrent protection event is detected, the driver circuit (30) determines whether a currently acquired impedance value (Z1) is larger than the second threshold (Zmin), and in case the currently acquired impedance value (Z1) is larger than the second threshold (Zmin), the driver circuit (30) lowers the first threshold (Zmax) such that it is still larger than the second threshold (Zmin).

7. Passive start and entry system (12) for a vehicle (10), wherein the passive start and entry system (12) comprises a driver circuit (30) according to claim 6

## Patentansprüche

1. Verfahren zur Steuerung von mindestens einer Antenne (16) für ein passives Startund Zugangssystem (12) eines Fahrzeugs (10) mittels einer Treiberschaltung (30), wobei während eines ersten Betriebszyklus (S10) der Antenne (16), in dem die Treiberschaltung (30) die Antenne (16) zum Senden eines Signals (18) steuert, die Treiberschaltung (30) einen Antennenstrom (I) durch die Antenne (16) in Abhängigkeit von einem voreingestellten Zielantennenstrom (It) und in Abhängigkeit von mindestens einem Steuerparameter steuert, wobei die Treiberschaltung (30) zu Beginn der Steuerung des Antennenstroms (I) mindestens einen vorgegebenen ersten Steuerparameterwert (Z0, D1, U1) als ersten Anfangswert des mindestens einen Steuerparameters verwendet,
wobei
die Treiberschaltung (30) bestimmt, ob eine bestimmte Schwellenwertbedingung (S14) erfüllt ist, und nur falls die bestimmte Schwellenwertbedingung (S14) erfüllt ist, die Treiberschaltung (30) mindestens einen zweiten Steuerparameterwert (Z1, D2, U2), der während des ersten Betriebszyklus (S10) erfasst und gespeichert wurde, als zweiten Anfangswert des mindestens einen Steuerparameters für einen nächsten zweiten Betriebszyklus (S16) verwendet,
**dadurch gekennzeichnet, dass**
während des ersten Betriebszyklus (S10) ein mit der Antenne verknüpfter Impedanzwert (Z1) erfasst wird und die bestimmte Schwellenwertbedingung (S14) umfasst, dass der Impedanzwert (Z1) einen vorgegebenen ersten Schwellenwert (Zmax) nicht überschreitet und nicht kleiner als ein vorgegebener zweiter Schwellenwert (Zmin) ist,
wobei
falls ein Überstromereignis oder ein Überstromschutzereignis erkannt wird, die Treiberschaltung (30) bestimmt, ob der aktuell erfasste Impedanzwert (Z1) größer als der zweite Schwellenwert (Zmin) ist, und, falls der aktuell erfasste Impedanzwert (Z1) größer als der zweite Schwellenwert (Zmin) ist, die Treiberschaltung (30) den ersten Schwellenwert (Zmax) derart absenkt, dass er immer noch größer als der zweite Schwellenwert (Zmin) ist.

2. Verfahren nach einem der vorhergehenden Ansprüche,
wobei
der mindestens eine zweite Steuerparameterwert (Z1, D2, U2) eine Einstellung (D2, U2) bereitstellt oder von einer Einstellung (D2, U2) zur Steuerung des Antennenstroms (I) abgeleitet ist, nach der der Antennenstrom (I) im ersten Betriebszyklus (S10) mit dem voreingestellten Zielantennenstrom (It) übereinstimmte.

3. Verfahren nach einem der vorhergehenden Ansprüche,
wobei
falls die Schwellenwertbedingung (S14) nicht erfüllt ist, die Treiberschaltung (30) den mindestens einen vorgegebenen ersten Steuerparameterwert (Z0, D1, U1) als den zweiten Anfangswert des mindestens einen Steuerparameters zur Steuerung des Antennenstroms (I) im nächsten zweiten Betriebszyklus (S16) verwendet.

4. Verfahren nach einem der vorhergehenden Ansprüche,
wobei
der mindestens eine Steuerparameter eine Spannung und/oder ein Tastverhältnis der Treiberschaltung (30) und/oder eine mit der Antenne (16) verknüpfte Impedanz darstellt.

5. Verfahren nach einem der vorhergehenden Ansprüche,
wobei
die Treiberschaltung (30) den ersten Schwellenwert (Zmax) durch Subtraktion eines Prozentwerts (a) des ersten Schwellenwerts (Zmax) absenkt.

6. Treiberschaltung (30) zur Steuerung von mindestens einer Antenne (16) für ein passives Start- und Zugangssystem (12) eines Fahrzeugs (10), wobei die Treiberschaltung (30) dazu ausgebildet ist, während eines ersten Betriebszyklus (S10) der Antenne (16), in dem die Treiberschaltung (30) die Antenne (16) zum Senden eines Signals (18) steuert, einen Antennenstrom (I) durch die Antenne (16) in Abhängigkeit von einem voreingestellten Zielantennenstrom (It) und in Abhängigkeit von mindestens einem Steuerparameter zu steuern und zu Beginn der Steuerung des Antennenstroms (I) mindestens einen vorgegebenen ersten Steuerparameterwert (Z0, D1, U1) als ersten Anfangswert des mindestens einen Steuerparameters zu verwenden,
wobei die Treiberschaltung (30) dazu ausgebildet ist, zu bestimmen, ob eine bestimmte Schwellenwertbedingung (S14) erfüllt ist, und nur falls die bestimmte Schwellenwertbedingung (S14) erfüllt ist, mindestens einen zweiten Steuerparameterwert (Z1, D2, U2), der während des ersten Betriebszyklus (S10) erfasst und gespeichert wurde, als zweiten Anfangswert des mindestens einen Steuerparameters für einen nächsten zweiten Betriebszyklus (S16) zu verwenden, **dadurch gekennzeichnet, dass**
während des ersten Betriebszyklus (S10) ein mit der Antenne verknüpfter Impedanzwert (Z1) erfasst wird und die bestimmte Schwellenwertbedingung (S14) umfasst, dass der Impedanzwert (Z1) einen vorgegebenen ersten Schwellenwert (Zmax) nicht überschreitet und nicht kleiner als ein vorgegebener zweiter Schwellenwert (Zmin) ist,
wobei
falls ein Überstromereignis oder ein Überstromschutzereignis erkannt wird, die Treiberschaltung (30) bestimmt, ob ein aktuell erfasster Impedanzwert (Z1) größer als der zweite Schwellenwert (Zmin) ist, und, falls der aktuell erfasste Impedanzwert (Z1) größer als der zweite Schwellenwert (Zmin) ist, die Treiberschaltung (30) den ersten Schwellenwert (Zmax) derart absenkt, dass er immer noch größer als der zweite Schwellenwert (Zmin) ist.

7. Passives Start- und Zugangssystem (12) für ein Fahrzeug (10), wobei das passive Start- und Zugangssystem (12) eine Treiberschaltung (30) nach Anspruch 6 umfasst.

## Revendications

1. Procédé de commande d'au moins une antenne (16) pour un système de démarrage et d'entrée passif (12) d'un véhicule (10) au moyen d'un circuit de commande (30), dans lequel, lors d'un premier cycle de fonctionnement (S10) de l'antenne (16), au cours duquel le circuit de commande (30) commande l'antenne (16) pour envoyer un signal (18), le circuit de commande (30) commande un courant d'antenne (I) à travers l'antenne (16) en fonction d'un courant d'antenne cible prédéfini (It) et en fonction d'au moins un paramètre de commande, dans lequel, au début de la commande du courant d'antenne (I), le circuit de commande (30) utilise au moins une première valeur de paramètre de commande prédéfinie (Z0, D1, U1) comme première valeur initiale de l'au moins un paramètre de commande,
dans lequel
le circuit de commande (30) détermine si une condition de seuil (S14) est remplie et seulement si la condition de seuil (S14) est remplie, le circuit de commande (30) utilise au moins une seconde valeur de paramètre de commande (Z1, D2, U2) acquise et stockée au cours du premier cycle de fonctionnement (S10) comme seconde valeur initiale de l'au moins un paramètre de commande pour un second cycle de fonctionnement suivant (S16),
**caractérisé en ce que**
au cours du premier cycle de fonctionnement (S10), une valeur d'impédance (Z1) associée à l'antenne est acquise et la condition de seuil (S14) comprend le fait que la valeur d'impédance (Z1) ne dépasse pas un premier seuil (Zmax) prédéfini et n'est pas inférieure à un second seuil (Zmin) prédéfini,
dans lequel
en cas de détection d'un événement de surintensité ou d'un événement de protection contre les surintensités, le circuit de commande (30) détermine si la valeur d'impédance actuellement acquise (Z1) est supérieure au second seuil (Zmin), et si la valeur d'impédance actuellement acquise (Z1) est supérieure au second seuil (Zmin), le circuit de commande (30) abaisse le premier seuil (Zmax) de sorte qu'il soit toujours supérieur au second seuil (Zmin).

2. Procédé selon l'une des revendications précédentes,
dans lequel
l'au moins une seconde valeur de paramètre de commande (Z1, D2, U2) fournit un réglage (D2, U2) ou est dérivée d'un réglage (D2, U2) pour la commande du courant d'antenne (I) selon lequel le courant d'antenne (I) coïncide avec le courant d'antenne cible prédéfini (It) dans le premier cycle de fonctionnement (S10).

3. Procédé selon l'une des revendications précédentes,
dans lequel
si la condition de seuil (S14) n'est pas remplie, le circuit de commande (30) utilise l'au moins une première valeur de paramètre de commande prédéfinie (Z0, D1, U1) comme seconde valeur initiale de l'au moins un paramètre de commande pour commander le courant d'antenne (I) dans le second cycle de fonctionnement suivant (S16).

4. Procédé selon l'une des revendications précédentes,
dans lequel
l'au moins un paramètre de commande constitue une tension et/ou un rapport cyclique du circuit de commande (30) et/ou une impédance associée à l'antenne (16).

5. Procédé selon l'une des revendications précédentes,
dans lequel
le circuit de commande (30) abaisse le premier seuil (Zmax) en soustrayant une valeur en pourcentage (a) du premier seuil (Zmax).

6. Circuit de commande (30) destiné à commander au moins une antenne (16) pour un système de démarrage et d'entrée passif (12) d'un véhicule (10), dans lequel le circuit de commande (30) est configuré, au cours d'un premier cycle de fonctionnement (S10) de l'antenne (16), au cours duquel le circuit de commande (30) commande l'antenne (16) pour envoyer un signal (18), pour commander un courant d'antenne (I) à travers l'antenne (16) en fonction d'un courant d'antenne cible prédéfini (It) et en fonction d'au moins un paramètre de commande, et, au début de la commande du courant d'antenne (I), pour utiliser au moins une première valeur de paramètre de commande prédéfinie (Z0, D1, U1) comme première valeur initiale de l'au moins un paramètre de commande,
dans lequel le circuit de commande (30) est configuré pour déterminer si une condition de seuil (S14) est remplie et seulement si la condition de seuil (S14) est remplie, pour utiliser au moins une seconde valeur de paramètre de commande (Z1, D2, U2) acquise et stockée au cours du premier cycle de fonctionnement (S10) comme seconde valeur initiale de l'au moins un paramètre de commande pour un second cycle de fonctionnement suivant (S16),
**caractérisé en ce que**
au cours du premier cycle de fonctionnement (S10), une valeur d'impédance (Z1) associée à l'antenne est acquise et la condition de seuil (S14) comprend le fait que la valeur d'impédance (Z1) ne dépasse pas un premier seuil (Zmax) prédéfini et n'est pas inférieure à un second seuil (Zmin) prédéfini,
dans lequel
en cas de détection d'un événement de surintensité ou d'un événement de protection contre les surintensités, le circuit de commande (30) détermine si une valeur d'impédance actuellement acquise (Z1) est supérieure au second seuil (Zmin), et si la valeur d'impédance actuellement acquise (Z1) est supérieure au second seuil (Zmin), le circuit de commande (30) abaisse le premier seuil (Zmax) de sorte qu'il soit toujours supérieur au second seuil (Zmin).

7. Système de démarrage et d'entrée passif (12) d'un véhicule (10), dans lequel le système de démarrage et d'entrée passif (12) comprend un circuit de commande (30) selon la revendication 6.
